Europäisches Patentamt

European Patent Office

Office européen des brevets

(19)

(11) Publication number : **0 533 452 A1**

(12) **EUROPEAN PATENT APPLICATION**

(21) Application number : **92308430.5**

(22) Date of filing : **16.09.92**

(51) Int. Cl.$^5$ : **C08F 10/02, C08F 2/34, C08F 297/08**

(30) Priority : **20.09.91 US 763040**

(43) Date of publication of application :
**24.03.93 Bulletin 93/12**

(84) Designated Contracting States :
**AT BE DE FR GB IT NL SE**

(71) Applicant : **MOBIL OIL CORPORATION**
**3225 Gallows Road**
**Fairfax, Virginia 22037-0001 (US)**

(72) Inventor : **Ali, Ahmed Hussein**
**1551 Amwell Road**
**Somerset, New Jersey 08873 (US)**
Inventor : **Hagerty, Robert Olds**
**19 Mayfield Place**
**Metuchen, New Jersey 08840 (US)**
Inventor : **Ong, Shimay Christine**
**26 Glenview Avenue**
**Warren, New Jersey 07059 (US)**

(74) Representative : **Colmer, Stephen Gary et al**
**Patent Department, Mobil Court, 3 Clements**
**Inn**
**London WC2A 2EB (GB)**

(54) **Production of bimodal ethylene polymers in tandem reactors.**

(57)   A process is provided for producing a bimodal ethylene polymer blend comprising contacting in a first gas phase, fluidized bed reaction zone under polymerization conditions, a gaseous monomeric composition comprising a major proportion of ethylene and, optionally, hydrogen, with a non-prereduced supported titanium/magnesium precursor catalyst as primary catalyst component in combination with a hydrocarbyl aluminium reducing co-catalyst, the hydrogen/ethylene molar ratio ($H_2/C_2$ ratio) being no higher than about 0.3 and the ethylene partial pressure being no higher than about 100 psia, to produce a relatively high molecular weight (HMW) polymer associated with catalyst particles, transferring the HMW/catalyst particles to a second gas phase, fluidized bed reaction zone into which is also fed hydrogen and a gaseous monomeric composition comprising a major proportion of ethylene, under polymerization conditions including an $H_2/C_2$ ratio of at least about 0.9 and at least about 8.0 times that in the first reaction zone, and an ethylene partial pressure of at least 1.7 times that in said first reaction zone, to produce a low molecular weight (LMW) polymer deposited on and within the voids of the HMW polymer/catalyst particles, the resulting bimodal polymer blend obtained from the second reaction zone having a fraction of HMW polymer of at least about 0.35.

EP 0 533 452 A1

The invention relates to a process for producing ethylene polymers of high settled bulk density comprising a mixture of relatively high and low molecular weight polymers, by gas-phase, fluidized bed polymerization in tandem reactors.

In accordance with this invention, bimodal ethylene polymer blends having a desirable combination of processability and mechanical properties and high settled bulk density are produced by a process including the steps of polymerizing gaseous monomeric compositions comprising a major proportion of ethylene in at least two gas phase, fluidized bed reactors operating in the tandem mode under the following conditions. In the first reactor, a gas comprising monomeric composition and, optionally, a small amount of hydrogen, is contacted under polymerization conditions with a supported, non-prereduced titanium/ magnesium complex catalyst precursor as hereinafter defined in combination with a hydrocarbyl aluminum reducing co-catalyst, at a hydrogen/ ethylene molar ratio of no higher than about 0.3 and an ethylene partial pressure no higher than about 100 psia such as to produce a relatively high molecular weight (HMW) polymer powder wherein the polymer is deposited on the catalyst particles. The HMW polymer powder containing the catalyst is then transferred to a second reactor with, optionally, additional co-catalyst which may be the same or different from the co-catalyst utilized in the first reactor but with no additional transition metal catalyst component, together with a gaseous mixture comprising hydrogen and monomeric composition wherein additional polymerization is carried out at a hydrogen/ethylene molar ratio of at least about 0.9, the ratio being sufficiently high such that it is at least about 8.0 times that in the first reactor, and an ethylene partial pressure at least about 1.7 times that in the first reactor, to produce a relatively low molecular weight (LMW) polymer much of which is deposited on and within the HMW polymer/catalyst particles from the first reactor, such that the fraction of HMW polymer in the bimodal polymer leaving the second reactor is at least about 0.35.

The foregoing conditions provide for a process wherein the production of fines tending to foul compressors and other equipment is kept to a relatively low level. Moreover, such conditions provide for an inhibited level of productivity in the first reactor with a resulting increased level of productivity in the second reactor to produce a bimodal polymer blend having a favorable melt flow ratio (MFR, an indication of molecular weight distribution) and a high degree of homogeneity (indicated by low level of gels and low heterogeneity index) caused by a substantial degree of blending of HMW and LMW polymer in each final polymer particle inherently resulting from the process operation. Related to the foregoing effects is the fact that the process is capable of producing bimodal polymers of relatively high settled bulk density (SBD), e.g. of at least 21 lb/ft$^3$. This is surprising since the supported magnesium-titanium complex catalyst precursor utilized in the process generally cannot be used to produce polymers of such high SBD's when used in prior processes, including single stage gas phase fluidized bed processes, unless it is prereduced before use, e.g. with an aluminum alkyl.

The bimodal blend is capable of being processed without undue difficulty into films having a superior combination of mechanical properties.

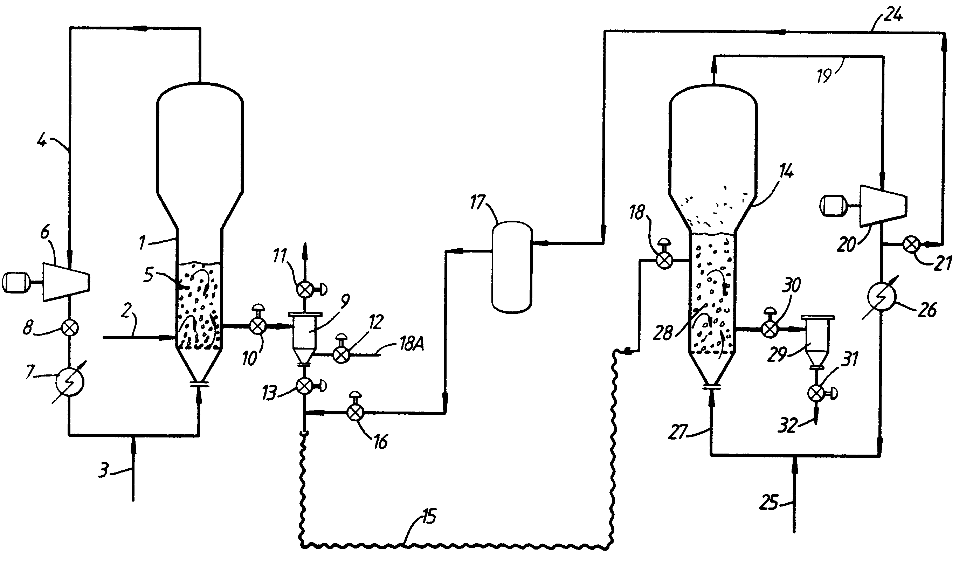

The drawing is a schematic diagram of a process illustrating the invention.

The gaseous monomer entering both reactors may consist wholly of ethylene or may comprise a preponderance of ethylene and a minor amount of a comonomer such as a 1-olefin containing 3 to about 10 carbon atoms. Comonomeric 1-olefins which may be employed are, for example, 1-butene, 1-pentene, 1-hexene, 4-methyl-1-pentene, 1-octene, 1-decene, and mixtures thereof. The comonomer may be present in the monomeric compositions entering either or both reactors.

In many case, the monomer composition will not be the same in both reactors. For example, in making resin intended for high density film, it is preferred that the monomer entering the first reactor contain a minor amount of comonomer such as 1-hexene so that the HMW component of the bimodal product is a copolymer, whereas the monomer fed to the second reactor consists essentially of ethylene so that the LMW component of the product is substantially an ethylene homopolymer. When a comonomer is employed so as to obtain a desired copolymer in either or both reactors, the molar ratio of comonomer to ethylene may be in the range, for example, of about 0.005 to 0.7, preferably about 0.04 to 0.6.

Hydrogen may or may not be used to modulate the molecular weight of the HMW polymer made in the first reactor. Thus, hydrogen may be fed to the first reactor such that the molar ratio of hydrogen to ethylene ($H_2/C_2$ ratio) is, for example, up to about 0.3, preferably about 0.005 to 0.2. In the second reactor it is necessary to produce a LMW polymer with a low enough molecular weight and in sufficient quantity so as to produce a bimodal resin which can be formed, with a minimum of processing difficulties, into end use products such as films and bottles having a superior combination of mechanical properties. For this purpose, hydrogen is fed to the second reactor with the ethylene containing monomer such that the hydrogen to ethylene mole ration in the gas phase is at least about 0.9, preferably in the range of about 0.9 to 5.0 and most preferably in the range of about 1.0 to 3.5. Moreover, to provide a sufficient difference between the molecular weights of the polymers in the first and second reactor so as to obtain a bimodal resin product having a wide enough molecular weight distribution necessary for the desired levels of processability and mechanical properties, the hydrogen to ethylene mole ratios in the two reactors should be such that the ratio in the second reactor is at least about 8.0 times the ratio in the first reactor, for example in the range 8.0 to 10,000 times such ratio, and preferably 10 to 200 times the ratio in the first reactor.

Utilizing the hydrogen to ethylene ratios set out previously to obtain the desired molecular of the HMW and LMW polymers produced in the first and second reactors respectively tends to result in relatively high polymer productivity in the first reactor and relatively low productivity in the second reactor. This tends to result in turn in a bimodal polymer product containing too little LMW polymer to maintain satisfactory processability. A significant part of this invention lies in the discovery that this effect can be largely overcome by employing ethylene partial pressures in the two reactors so as to reduce the polymer productivity in the first reactor and raise such productivity in the second reactor. For this purpose, the ethylene partial pressure employed in the first reactor is no higher than about 100 psia, for example in the range of about 15 to 100 psia, preferably in the range of about 20 to 80 psia, preferably 20 to 50 psia, and the ethylene partial pressure in the second reactor is, for example in the range of about 26 to 170 psia, preferably about 70 to 120 psia, with the ethylene partial pressures in any specific process being such that the ratio of ethylene partial pressure in the second to that in the first reactor is at least about 1.7, preferably about 1.7 to 7.0, and more preferably about 2.0 to 4.0.

In some instances, it may be advantageous to add an alkane, e.g., of about 5 to 8 carbon atoms, to the first (HMW) reactor for the purpose of reducing or eliminating static charge which often forms under the conditions employed in this reactor. Such charge, if not removed or reduced, has a tendency to cause catalyst and resin fines to migrate to the wall of the reactor where they may foul pressure taps causing erroneous readings for the bed level.

Preferred alkanes for this purpose are isopentane which may be used, for example, at a partial pressure in the first reactor of at least about 40 psi, e.g., 40-50 psi, and n-hexane which may be used, for example, at a partial pressure of at least about 10 psi, e.g., 10-12 psi.

If desired for any purpose, e.g., to control superficial gas velocity or to absorb heat of reaction, an inert gas such as nitrogen may also be present in one or both reactors in addition to the monomer and hydrogen. Thus the total pressure in both reactors may be in the range, for example, of about 100 to 600 psig, preferably about 200 to 350 psig.

The temperature of polymerization in the first reactor may be in the range, for example, of about 60 to 130°C, preferably about 60 to 90°C, while the temperature in the second reactor may be in the range, for example, of about 80 to 130°C, preferably about 90 to 120°C. For the purpose of controlling molecular weight and productivity in both reactors, it is preferred that the temperature in the second reactor be at least about 10°C higher, preferably about 30 to 60°C higher than that in the first reactor.

The residence time of the catalyst, in each reactor is controlled so that the productivity is suppressed in the first reactor and enhanced in the second reactor, consistent with the desired properties of the bimodal polymer product. Thus, the residence time may be, for example, about 0.5 to 6.0 hours, preferably about 1.0 to 3.0 hours in the first reactor, and, for example, about 1 to 12 hours, preferably about 2.5 to 5.0 hours in the second reactor, with the ratio of residence time in the second reactor to that in the first reactor being in the range, for example, of about 5.0 to 0.7, preferably about 2 to 1.

The superficial gas velocity through both reactors is sufficiently high to disperse effectively the heat of reaction so as to prevent the temperature from rising to levels which could partially melt the polymer and shut the reactor down, and high enough to maintain the integrity of the fluidized beds. Such gas velocity is in the range, for example, of about 40 to 120, preferably about 50 to 90 cm/sec.

The productivity of the process in the first reactor in terms of grams of polymer per gram atom of transition metal in the catalyst multiplied by $10^6$, may be in the range, for example, of about 1.6 to 16.0, preferably about 3.2 to 9.6; in the second reactor, the productivity may be in the range, for example, of about 0.6 to 9.6, preferably about 1.6 to 3.5, and in the overall process, the productivity is in the range, for example, of about 2.2 to 25.6, preferably about 4.8 to 16.0. The foregoing ranges are based on analysis of residual catalyst metals in the resin product.

The polymer produced in the first reactor has a flow index (FI or $I_{21}$, measured at 190°C in accordance with ASTM D-1238, Condition F), for example, of about 0.05 to 5, preferably about 0.1 to 3 grams/10 min. and a density in the range, for example, of about 0.890 to 0.960, preferably about 0.900 to 0.940 grams/cc.

The polymer produced in the second reactor has a melt index (MI or $I_2$, measured at 190°C in accordance with ASTM D-1238, Condition E) in the range, for example, of about 10 to 4000, preferably about 15 to 2000 grams/10 min. and a density in the range, for example, of about 0.890 to 0.976, preferably about 0.930 to 0.976 grams/cc. These values are calculated based on a single reactor process model using steady state process data.

The final granular bimodal polymer from the second reactor has a weight fraction of HMW polymer of at least about 0.35, preferably in the range of about 0.35 to 0.75, more preferably about 0.45 to 0.65, a flow index in the range, for example, of about 3 to 200, preferably about 6 to 100 grams/10 min., a melt flow ratio (MFR, calculated as the ratio of flow index to melt index) in the range, for example, of about 60 to 250, preferably about 80 to 150, a density in the range, for example, of about 0.89 to 0.965, preferably about 0.910 to 0.960, an average particle size (APS) in the range, for example, of about 127 to 1270, preferably about 380 to 1100 microns, and a fines content (defined as particles which pass through a 120 mesh screen) of less than about 10 weight percent, preferably less than about 6 weight percent. With regard to fines content, it has been found that a very low amount of fines are produced in the first (HMW) reactor and that the percentage of fines changes very little across the second reactor. This is surprising since a relatively large amount of fines are produced when a single gas phase, fluidized bed system is used to produce a relatively low molecular weight (LMW) polymer as defined herein. A probable explanation for this is that in the process of this invention, the LMW polymer formed in the second reactor deposits primarily within the void structure of the HMW polymer particles produced in the first reactor, minimizing the formation of LMW fines. This is indicated by an increase in settled bulk density (SBD) across the second reactor while the APS stays fairly constant.

When pellets are formed from granular resin which was stabilized and compounded with two passes on a Brabender extruder to ensure uniform blending, such pellets have a flow index in the range, for example, of about 3 to 200, preferably about 6 to 100 grams/10 min., a melt flow ratio in the range, for example, of about 60 to 250, preferably about 80 to 150, and a heterogeneity index (HI, the ratio of the FI's of the granular to the pelleted resin) in the range for example of about 1.0 to 1.5, preferably about 1.0 to 1.3. HI indicates the relative degree of inter-particle heterogeneity of the granular resin.

The catalyst used in the polymerization is a type of Ziegler-Natta catalyst, also referred to in the literature as a coordination catalyst, which comprises:

(i) a catalyst precursor complex or mixture of complexes consisting essentially of magnesium, titanium, a halogen, and an electron donor, as hereinafter defined, supported on an inorganic porous carrier; and

(ii) at least one hydrocarbyl aluminum co-catalyst.

The titanium based complex or mixture of complexes is exemplified by an empirical formula $Mg_a$-$Ti(OR)_bX_c(ED)_d$ wherein R is an aliphatic or aromatic hydrocarbon radical having 1 to 14 carbon atoms or $COR'$ wherein $R'$ is an aliphatic or aromatic hydrocarbon radical having 1 to 14 carbon atoms; each OR group is alike or different; X is Cl, Br, or I, or mixtures thereof; ED is an electron donor, which is a liquid Lewis base in which the precursors of the titanium based complex are soluble; a is 0.5 to 56; b is 0, 1, or 2; c is 1 to 116, particularly 2 to 116; and d is 2 to 85. The complex is formed by reacting appropriate titanium and magnesium compounds in the presence of the electron donor.

A titanium compound which can be used in the above preparations has the formula $Ti(OR)_aX_b$ wherein R and X are as defined for component (i) above; a is 0, 1 or 2; b is 1 to 4; and a+b is 3 or 4. Suitable compounds are $TiCl_3$, $TiCl_4$, $Ti(OC_6H_5)Cl_3$, $Ti(OCOCH_3)Cl_3$ and $Ti(OCOC_6H_5)Cl_3$.

A magnesium compound which may be reacted with the foregoing titanium compound in the presence if an electron donor to form the complex has the formula $MgX_2$ wherein X is as defined for component (i) above. Suitable examples are $MgCl_2$, $MgBr_2$, and $MgI_2$. Anhydrous $MgCl_2$ is a prefered compound. About 0.5 to 56, and preferably about 1 to 10, moles of the magnesium compound are used per mole of titanium compound.

The electron donor present in the catalyst composition is an organic compound, liquid at temperatures in the range of about 0°C to about 200°C. It is also known as a Lewis base. the titanium and magnesium compounds are both soluble in the electron donor.

The electron donors may be selected from the group consisting of alkyl esters of aliphatic and aromatic carboxylic acids, aliphatic ketones, aliphatic amines, aliphatic alcohols, alkyl and cycloalkyl ethers, and mixtures thereof, each electron donor having 2 to 20 carbon atoms. Among these electron donors, the preferred are alkyl and cycloalkyl ethers having 2 to 20 carbon atoms; dialkyl, diaryl and alkyaryl ketones having 3 to 20 carbon atoms; and alkyl, alkoxy, and alkylalkoxy esters of alkyl and aryl carbonxylic acids having 2 to 20 carbon atoms. The most preferred electron donor is tetrahydrofuran. Other examples of suitable electron donors are methyl formate, ethyl acetate, butyl acetate, ethyl ether, dioxane, di-n-propyl ether, dibutyl ether, ethyl formate, methyl acetate, ethyl anisate, ethylene carbonate, tetrahydropyran, and ethyl propionate.

The co-catalyst may, for example, have the formula $AlR''_eX'_fH_g$ wherein X' is Cl or $OR''$; R'' and R'' are saturated aliphatic hydrocarbon radicals having 1 to 14 carbon atoms and are alike or different; f is 0 to 1.5; g is 0 or 1; and e + f + g = 3. Examples of suitable R, R', R'' and R'' radicals are: methyl, ethyl, propyl, isopropyl, butyl, isobutyl, tert-butyl, pentyl, neopentyl, hexyl, 2-methylpentyl, heptyl, octyl, isooctyl, 2-ethylhexyl, 5,5-dimethylhexyl, nonyl, isodecyl, undecyl, dodecyl, cyclohexyl, cycloheptyl, and cyclooctyl. Examples of suitable R and R' radicals are phenyl, phenethyl, methyloxyphenyl, benzyl, tolyl, xylyl, naphtal, and methylnaphtyl. Some examples of useful co-catalysts are triisobutylaluminum, trihexyaluminum, di-isobutylaluminum, hydride, dihexylaluminum hydride, di-isobutylhexylaluminum, trimethylaluminum, triethylaluminum, diethylaluminum

chloride, $Al_2(C_2H_5)_3Cl_3$, and $Al(C_2H_5)_2(OC_2H_5)$.

The preferred support for the titanium/magnesium precursor complex is silica. Other suitable inorganic oxide supports are aluminum phosphate, alumina, silica/alumina mixtures, silica pretreated with an organoaluminum compound such as triethylaluminum, and silica modified with diethylzinc, such modifier being used in a quantity sufficient to react with the hydroxyl groups on the support which otherwise tend to react with and deactivate part of the titanium in the catalyst, but not in sufficient quantity to function as a co-catalyst. A typical support is a solid, particulate material essentially inert to the polymerization. It is used as a dry powder having an average particle size of about 10 to 250 microns and preferably about 30 to about 100 microns; a surface area of at last about 3 square meters per gram and preferably at least about 50 square meters per gram; and a pore size of at least about 80 Angstroms and preferably at least about 100 Angstroms. Generally, the amount of support used is that which will provide about 0.01 to about 0.5, and preferably about 0.2 to about 0.35 millimole of transition metal per gram of support. Impregnation of the above-mentioned catalyst precursor into, for example, silica is accomplished by mixing the complex and silica gel in the electron donor solvent followed by solvent removal under reduced pressure and/or elevated temperature.

In most instances, it is preferred that the titanium/magnesium precursor complex not be physically combined with the hydrocarbyl aluminum co-catalyst prior to being fed to the first reactor, but that these components be fed to such reactor separately, and that an additional quantity of the hydrocarbyl aluminum co-catalyst be fed to the second reactor in an amount sufficient to increase catalyst activity in the second reactor. In any case, it is not necessary in the process of this invention to prereduce or activate the titanium/magnesium precursor complex with an amount of co-catalyst prior to feeding the complex to the first reactor, i.e., the titanium/magnesium precursor complex is in its original oxidation state as prepared when added to the reactor. If the precursor complex is physically combined with some co-catalyst prior to being fed to the first reactor, it is nevertheless often advantageous to feed additional quantities of co-catalyst to each reactor to maintain the level of activity of or fully activate the catalyst. The co-catalyst is fed to each reactor neat or as a solution in an inert solvent such as isopentane.

Broad, exemplary ranges and preferred ranges of molar ratios of various components of the foregoing catalyst systems utilizing titanium/magnesium complexes are as follows:

## Table I

| Catalyst Components | Broad Exemplary Range | Preferred Range |
|---|---|---|
| 1. Mg:Ti | 0.5:1 to 56:1 | 1.5:1 to 5:1 |
| 2. Mg:X | 0.005:1 to 28:1 | 0.075:1 to 1:1 |
| 3. Ti:X | 0.01:1 to 0.5:1 | 0.05:1 to 0.2:1 |
| 4. Mg:ED | 0.005:1 to 28:1 | 0.15:1 to 1.25:1 |
| 5. Ti:ED | 0.01:1 to 0.5:1 | 0.1:1 to 0.25:1 |
| 6. Total Co-catalyst:Ti | 0.6:1 to 250:1 | 11:1 to 105:1 |
| 7. ED:Al | 0.05:1 to 25:1 | 0.2:1 to 5:1 |

Specific examples of the described catalysts comprising a titanium/magnesium complex, and methods fir their preparation are disclosed, for example, in U.S. Patent Nos. 3.989,881; 4,124,532, 4,174,429; 4,349,648; 4,379,759; 4,719,193; and 4,888,318 and European Patent application Publication Nos. 0 012 148; 0 091 135; 0 120 503; and 0 369 436; and the entire disclosures of these patents and publications pertaining to catalysts are incorporated herein by reference.

The amount of hydrocarbyl aluminum co-catalyst added to the first reactor is generally in the range, for example, of about 2 to 100 gram atoms of co-catalyst metal, e.g., aluminum, per gram atom of transition metal, e.g., titanium, preferably about 5 to 50 gram atoms of co-catalyst metal per gram atom of transition metal. Any amount of co-catalyst added to the second reactor is not included in the foregoing ranges. However, it is preferred that additional co-catalyst be fed to the second reactor to increase catalyst activity.

Referring now to the drawing, the titanium/magnesium precursor complex is fed into first reactor 1 through line 2. Ethylene, comonomer, e.g., 1-hexene, if used, hydrogen, if used, alkane, e.g., isopentane, if used, inert gas such as nitrogen, if used, and co-catalyst, e.g., triethylaluminum (TEAL), are fed through line 3 into recycle line 4 where they are combined with recycle gas and fed into the bottom of reactor 1. The gas velocity is high enough and the size and density of the particles in reactor 1 are such as to form a fluidized or dense bed 5 comprising catalyst particles associated with polymer formed by the polymerization of ethylene and, if present, comonomer within reactor 1. The conditions in reactor 1, e.g. partial pressure of ethylene, hydrogen/ethylene molar ratio, temperature, etc. are controlled such that the polymer which forms is of relatively high molecular weight (HMW). Recycle gas leaving the top of reactor 1 through line 4 is recompressed in compressor 6, cooled in heat exchanger 7 after passing through valve 8 and are fed to the bottom of reactor 1 after being combined with make-up gases and co-catalyst from line 3 as described.

Periodically, when sufficient HMW polymer has formed in reactor 1, the polymer and catalyst 1 are transferred to discharge tank 9 by opening valve 10 while valves 11, 12 and 13 remain closed. When an amount of the HMW polymer and catalyst from reactor 1 which is desired to be transferred has been fed to discharge tank 9, the transfer system to second reactor 14 is activated by opening valve 13 to force the HMW polymer and catalyst into transfer hose 15. Valve 13 is then closed to isolate transfer hose 15 from discharge tank 9 and valve 11 is opened, ensuring that any gases leaking through valve 13 are vented and do not back-leak across valve 10 into reactor 1. Transfer hose 15 is then pressurized with reactor-cycle gas from reactor 14 by opening valve 16. To minimize upsets in reactor 14, surge vessel 17 is used to store gas for pressuring transfer hose 15. With valve 16 still in the open position, valve 18 is opened to convey HMW polymer and catalyst into reactor 14. Both valves 16 and 18 are left open for a period to sweep transfer hose 15. Valves 18 and 16 are then closed sequentially. Transfer hose 15 is then vented by opening valve 13, valve 11 having remained open during the transfer operation. Discharge tank 9 is then purged with purified nitrogen through line 18A by opening valve 12.

During the transfer, cycle gas comprising hydrocarbons and hydrogen leaves reactor 14 through line 19, is compressed by compressor 20, flows through valve 21 in line 24 and through surge tank 17, valve 16 and pressurized transfer hose 15 as described, thus effecting the transfer of HMW polymer and catalyst to reactor 14.

After the transfer to reactor 14 is effected, the flow of gas from reactor 14 to transfer hose 15 is stopped by closing valves 21 and 16. Ethylene, hydrogen, comonomer, e.g., n-hexene, if used, inert gas such as nitrogen, if used, and co-catalyst or catalyst component, if used, e.g. TEAL, are fed to reactor 14 through line 25 after being combined with unreacted cycle gas leaving the top of reactor 14 through line 19 which is compressed in compressor 20, cooled in heat exchanger 26 and enters the bottom of reactor 14 through line 27. The gas velocity and size and density of the particles in reactor 14 are such as to form fluidized or dense bed 28 of bimodal polymer particles associated with the catalyst, including the transition metal primary catalyst component added to reactor 1. The conditions in reactor 14, e.g., partial pressure of ethylene, hydrogen/ethylene ratio and temperature, are controlled such that a relatively low molecular weight (LMW) polymer forms primarily within the voids of the HMW polymer/catalyst particles transferred from reactor 1. After a sufficient amount of LMW polymer has formed resulting in a bimodal polymer having a desirable molecular weight distribution and other properties, the polymer is transferred to discharge tank 29 by opening valve 30 while keeping valve 31 closed. After substantially all the polymer has been transferred to discharge tank 29, it is collected by closing valve 30 and opening valve 31, resulting in the pressure discharge of the final polymer product through line 32.

The following examples further illustrate the invention.

Example 1

A catalyst was prepared by reacting $MgCl_2$, tetrahydrofuran (THF) and $TiCl_3 \cdot 0.33\,AlCl_3$, adding the resulting complex to dehydrated silica treated with sufficient triethylaluminum to react with the OH groups in the silica but not enough to function significantly as partial activator or co-catalyst, and drying the resulting silica supported catalyst precursor. The procedure used to prepare the catalyst was substantially that of Example 4 of U.S. Patent No. 4,888,318 except that the partial activation of the supported titanium/magnesium precursor complex with tri-n-hexylaluminum and diethylaluminum chloride, as shown in the patent, was omitted. The free flowing catalyst powder contained the following weight percentages of components: Ti, 1.13; Mg, 1.95; Cl, 8.22; THF, 15.4; and Al, 1.41.

Using the foregoing non-prereduced catalyst, a gas phase, fluidized bed polymerization process was carried out using two reactors operating in the tandem mode as shown in the drawing. The process included the feeding of 1-butene as comonomer and triethylaluminum (TEAL) as co-catalyst to both reactors and isopentane to the first reactor. Nitrogen was used to control the total pressure in both reactors at about 300 psig. Averages of other conditions in both reactors, which were controlled to produce a bimodal polymer suitable for being formed into high density films, are shown in Table II, wherein "$PC_2=$" is the partial pressure of the ethylene, "$H_2/C_2$" is the molar ratio of hydrogen to ethylene, "$C_4/C_2$" is the molar ratio of 1-butene to ethylene in the gas phase, and "$IC_5$" is the partial pressure of isopentane.

## Table II

| | Reactor 1 (HMW) | Reactor 14 (LMW) |
|---|---|---|
| Temp. (°C) | 74 | 110 |
| $PC_2=$ (psi) | $43 \pm 3$ | $84 \pm 3$ |
| $H_2/C_2$ ratio | 0.018 | 2.1 |
| $C_4/C_2$ ratio | 0.085 | 0.008 |
| $IC_5$ (psi) 43 | 9 | |
| TEAL (PPMW) | 510 | 94 |
| Throughput (lb/hr) | 24 | 44 |
| Resid. Time (hrs) | 3.0 | 2.7 |

The HMW polymer leaving reactor 1 was found by direct measurement to have a flow index (FI or $I_{21}$) of 0.5 g/10 min. and a density of 0.928 g/cc while the LMW polymer produced in reactor 14 was calculated from a single reactor process model to have a melt index (MI or $I_2$) of 1000 g/10 min. and a density of 0.975 g/cc.

Properties of the bimodal polymer obtained from reactor 14 in granular or pelleted form are shown in Table III, wherein "SBD" is the settled bulk density and "APS" is the average particle size.

Table III

| | Granular |
|---|---|
| SBD (lb/ft³) | 21 |
| Fines (wt.%) | 4 |
| APS (inch) | 0.019 |
| Productivity (lb/lb solid cat) | 2500 |
| HMW Fraction | 0.55 |
| | Pelleted |
| FI (g/10 min) | 7.9 |
| Density (g/cc) | 0.947 |
| MFR | 95 |

## Example 2

This example was similar to Example 1 except that the conditions were controlled to produce a LMW component of high MI to improve processability. The process conditions employed in the two reactors are shown in Table IV.

Table IV

| | Reactor 1 (HMW) | Reactor 14 (LMW) |
|---|---|---|
| Temp. (°C) | 74 | 110 |
| $PC_2$ (psi) | 29 ±3 | 70 ±3 |
| $H_2/C_2$ ratio | 0.015 | 2.4 |
| $C_4/C_2$ ratio | 0.050 | 0.005 |
| $IC_5$ | 45 | 9 |
| TEAL (PPMW) | 380 | 94 |
| Throughput (lb/hr) | 24 | 40 |
| Resid. Time (hrs) | 3.0 | 3.0 |

The HMW polymer leaving reactor 1 was found by direct measurement to have a flow index (Fi or $I_{21}$) of 0.5 g/10 min. and a density of 0.929 g/cc while the LMW polymer produced in reactor 14 was calculated from a single reactor process model to have a melt index (Mi or $I_2$) of 1400 g/10 min. and a density of 0.975 g/cc.

Properties of the bimodal polymer obtained from LMW reactor 14 in granular or pelleted form are shown in Table V.

Table V

| | Granular |
|---|---|
| SBD (lb/ft³) | 21 |
| Fines (wt.%) | 5 |
| APS (inch) | 0.018 |
| Productivity (lb/lb solid cat) | 2800 |
| HMW Fraction | 0.60 |
| | Pelleted |
| FI (g/10 min) | 9.0 |
| Density (g/cc) | 0.948 |
| MFR | 105 |

Example 3

This example was similar to Examples 1 and 2 except that conditions were controlled to test the effect of a higher catalyst bed temperature in HMW reactor 1. Process conditions employed in each reactor are shown in Table VI.

## Table VI

|  | Reactor 1 (HMW) | Reactor 14 (LMW) |
|---|---|---|
| Temp. (°C) | 100 | 110 |
| $PC_2^=$ (psi) | 45 $\pm$ 3 | 103 $\pm$ 3 |
| $H_2/C_2$ ratio | 0.000 | 1.8 |
| $C_4/C_2$ ratio | 0.048 | 0.026 |
| $IC_5$ | 43 | 7 |
| TEAL (PPMW) | 510 | 94 |
| Throughput (lb/hr) | 24 | 45 |
| Resid. Time (hrs) | 3.0 | 2.6 |

The HMW polymer leaving reactor 1 was found by direct measurement to have a flow index (FI or $I_{21}$) of 0.3 g/10 min. and a density of 0.928 g/cc while the LMW polymer produced in reactor 14 was calculated from a single reactor process model to have a melt index (MI or $I^2$) of 600 g/10 min. and a density of 0.970 g/cc.

Properties of the bimodal polymer obtained from LMW reactor 14 are shown in Table VII.

## Table VII

| Granular | |
|---|---|
| SBD (lb/ft$^3$) | 21 |
| Fines (wt.%) | 6 |
| APS (inch) | 0.018 |
| Productivity (lb/lb solid cat) | 1800 |
| HMW Fraction | 0.53 |

| Pelleted | |
|---|---|
| FI (g/10 min) | 6.5 |
| Density (g/cc) | 0.948 |
| MFR | 150 |

Surprisingly, it was found that the non-prereduced catalyst of this example yielded a granular bimodal resin having a commercially acceptable settled bulk density (SBD) of 24 lb/ft³ when used in the tandem mode process of this invention, whereas prereduction of the silica-supported Ti/Mg complex has been found to be necessary to obtain this level of SBD when the catalyst is used in a single stage gas phase fluidized bed process.

## Claims

1.  A process for producing a bimodal ethylene polymer blend, which process comprises :

    contacting in a first gas phase, fluidized bed reaction zone under polymerization conditions, a gaseous monomeric composition comprising a major proportion of ethylene and, optionally, hydrogen, with a supported titanium/magnesium complex catalyst precursor, as hereinafter defined, as primary catalyst component in combination with a hydrocarbyl aluminum as reducing co-catalyst, the hydrogen/ethylene molar ratio ($H_2/C_2$ ratio) being no higher than about 0.3 and the ethylene partial pressure being no higher than about 100 psia, to produce a relatively high molecular weight (HMW) polymer associated with catalyst particles;

    transferring the HMW/catalyst particles to a second gas phase, fluidized bed reaction zone into which is also fed hydrogen and a gaseous monomeric composition comprising a major proportion of ethylene, but no additional transition metal component of said catalyst, under polymerization conditions including a $H_2/C_2$ ratio of at least 0.9 and at least 8.0 times that in the first reaction zone, and an ethylene partial pressure of at least 1.7 times that in the first reaction zone, to produce a relatively low molecular weight (LMW) polymer deposited on and within the voids of the HMW polymer/catalyst particles, the resulting bimodal polymer blend obtained from the second reaction zone having a fraction of HMW polymer of at least about 0.35;

the titanium/magnesium complex being supported on an inorganic porous carrier and having the empirical formula $Mg_aTi(OR)_bX_c(ED)_d$ wherein R is an aliphatic or aromatic hydrocarbon radical having 1 to 14 carbon atoms or COR′ wherein R′ is an aliphatic or aromatic hydrocarbon radical having 1 to 14 carbon atoms; each OR group is alike or different; X is Cl, Br, or I, or a mixture thereof; ED is an electron donor, which is a liquid Lewis base in which the precursors of the titanium-based complex are soluble; a is 0.5 to 56; b is 0, 1, or 2; c is 1 to 116; and d is 2 to 85, the complex being added to the first reaction zone in its initial oxidation state after it is formed by reacting a compound having the formula $Ti(OR)_aX_b$ wherein R and X are as defined for the formula of the complex, a is 0, 1 or 2; b is 1 to 4; and a+b is 3 or 4, with a compound having the formula $MgX_2$ wherein X is as defined for the formula of said complex, in the presence of the electron donor ED.

2. A process according to claim 1 wherein the monomeric composition fed to either or both reaction zones comprises a minor amount of a 1-olefin containing 3 to 10 carbon atoms as comonomer.

3. A process according to claim 2 wherein the 1-olefin is 1-hexene.

4. A process according to claim 2 or 3 wherein the monomeric composition entering the first reaction zone comprises ethylene and the comonomer, the molar ratio of comonomer to ethylene being from 0.04 to 0.7, and the monomeric composition entering the second reaction zone consists essentially of ethylene.

5. A process according to any preceding claim wherein the $H_2/C_2$ ratio in the first reaction zone is from 0.005 to 0.3 and the $H_2/C_2$ ratio in the second reaction zone is from 0.9 to 5.0.

6. A process according to any preceding claim wherein the $H_2/C_2$ ratio in the second reaction zone is from 1.0 to 3.5, and is from 10 to 200 times the $H_2/C_2$ ratio in the first reaction zone.

7. A process according to any preceding claim wherein the ethylene partial pressure in the first reaction zone is from 15 to 100 psia, the ethylene partial pressure in the second reaction zone is from 25 to 170 psia, and the ratio of ethylene partial pressure in the second reaction zone to that in the first reaction zone is from 1.7 to 7.0.

8. A process according to any preceding claim wherein the fraction of HMW polymer in the product obtained from the second reaction zone is from 0.35 to 0.75.

9. A process according to any preceding claim wherein the temperature in the second reaction is at least about 10°C higher than that in the first reaction zone.

10. A process according to any preceding claim wherein the composition in the first reaction zone includes a gaseous alkane having from 5 to 8 carbon atoms in an amount sufficient to reduce or eliminate static charge in the fluidized bed and the resulting tendency of catalyst and resin fines to migrate to the walls of the reaction zone.

11. A process according to claim 10 wherein said alkane is isopentane and/or n-hexane.

## EUROPEAN SEARCH REPORT

European Patent Office

Application Number

EP    92 30 8430

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | EP-A-0 503 791 (MOBIL OIL CORPORATION)<br>* claims 1-7,9-11 *<br>* example 4 *<br>--- | 1-9 | C08F10/02<br>C08F2/34<br>C08F297/08 |
| X | EP-A-0 227 838 (MITSUI PETROCHEMICAL INDUSTRIES)<br>* claim 1 *<br>* page 8, line 14 - page 9, line 7 *<br>* page 9, line 34 - page 10, line 5 *<br>* page 14, line 28 - page 15, line 4 *<br>* page 16, line 1 - page 17, line 27 *<br>* examples 1-5 *<br>--- | 1-3 | |
| A | CHEMICAL ABSTRACTS, vol. 102, no. 6,<br>1 February 1985, Columbus, Ohio, US;<br>abstract no. 46432v, 'Ethylene copolymers'<br>page 13 ;column 2 ;<br>* abstract *<br>& JP-A-59 179 508 (TOA NENRYO K.K.K.)<br>12 October 1984<br>--- | 1-11 | |
| A | EP-A-0 186 995 (NIPPON OIL CO)<br>* claims 1-5,7,10-11 *<br>* page 4, line 20 *<br>* page 6, line 5 - line 19 *<br>--- | | TECHNICAL FIELDS SEARCHED (Int. Cl.5)<br><br>C08F |
| D,A | EP-A-0 369 436 (UNION CARBIDE CHEMICALS AND PLASTICS COMPANY)<br>* claims 1-13 *<br>* page 3, line 31 - line 32 *<br>* page 9; table *<br><br>----- | 1-11 | |

The present search report has been drawn up for all claims

| Place of search | Date of completion of the search | Examiner |
|---|---|---|
| THE HAGUE | 09 DECEMBER 1992 | FISCHER B.R. |

EPO FORM 1503 03.82 (P0401)